# EUROPEAN PATENT APPLICATION

(11) **EP 3 778 812 A1**
(43) Date of publication of application: **17.02.2021**
(21) Application number: 19777294.0
(22) Date of filing: 28.03.2019
(51) Int. Cl.: C09D 201/00, B05D 1/36, B05D 5/00, B05D 7/24, C09D 5/00, C09D 5/16, C09D 7/65, C09D 183/04

(54) **UNDERCOAT LAYER-FORMING COMPOSITION, UNDERCOAT LAYER, AND COATING FILM**

(30) Priority: 28.03.2018 JP 2018063247
(71) Applicant: NITTO DENKO CORPORATION, Ibaraki-shi Osaka 567-8680 (JP)
(72) Inventor: TAKENOUCHI, Yuta, Ibaraki-shi, Osaka 567-8680 (JP); SUZUKI, Satoru, Ibaraki-shi, Osaka 567-8680 (JP); NAITO, Tomonari, Ibaraki-shi, Osaka 567-8680 (JP); IKENAGA, Akie, Ibaraki-shi, Osaka 567-8680 (JP); MURAKOSHI, Sakura, Ibaraki-shi, Osaka 567-8680 (JP)
(74) Representative: Gill Jennings & Every LLP
(86) International application number: PCT/JP2019/013878
(87) International publication number: WO 2019/189696

(57) **Abstract**

An object of the present invention is to provide a coating film that can be peeled in a sheet form, facilitates removal work and is less likely to be peeled even if used in an underwater structure for a long period of time, and an undercoat layer-forming composition for forming an undercoat layer of the coating film. The present invention relates to an undercoat layer-forming composition for forming an undercoat layer of a coating film including the undercoat layer and an antifouling layer which contains a silicone oil and is adhered to the undercoat layer, wherein the undercoat layer-forming composition contains a base polymer and a tackifying resin.

## Description

### TECHNICAL FIELD

The present invention relates to a coating film, an undercoat layer for forming the coating film, and an undercoat layer-forming composition. The coating film is used on, for example, the surface of an underwater structure such as a ship, and various exterior materials such as a roof and an exterior wall.

### BACKGROUND ART

In an underwater structure such as a ship, aquatic microorganisms such as barnacles, oysters, blue mussels, hydra, serpula, sea squirts, moss animals, sea lettuce, green laver and attached diatoms are sometimes attached to a water-contacting portion and bleed thereon. The aquatic microorganisms lead to deterioration of mechanical performance of facilities such as deterioration of thermal conductivity, and deterioration of the beauty of sightseeing facilities and ship. Particularly, in the ship, the aquatic microorganisms bring about lowering of speed and deterioration of fuel consumption by increased fluid resistance. Furthermore, aquatic microorganisms attached to a ship spread to other area, leading to disturbance of aquatic environment.

In the light of the circumstances, Patent Literature 1 discloses an antifouling paint that can prevent the attachment of marine organisms by applying the antifouling paint to the surface of an underwater structure. The antifouling paint uses less toxic composition, different from the conventional method, by using a photocatalyst. Furthermore, regarding the problem that a composition having an antifouling effect is enclosed by a binder and loses its effect, the Patent Literature uses a coating film comprising a surface side layer containing an antifouling agent and an adhesive that is provided between the layer containing an antifouling agent and the surface of a structure and adheres those to each other.

Patent Literature 2 provides an antifouling composition comprising zinc bisdimethyldithiocarbamoylethylenebisdithiocarbamate, a (meth)acrylate resin, a polyether silicone having a number average molecular weight of 500 to 20,000 and a monobasic acid having a molecular weight of 250 or more or a metal salt thereof. The antifouling composition improves not only antifouling property, but storage stability.

### CITATION LIST

### PATENT LITERATURE

Patent Literature 1: JP-A 2001-220524
Patent Literature 2: JP-A 2002-80778

### SUMMARY OF INVENTION

### TECHNICAL PROBLEM

However, an old coating film was required to be removed in the conventional paint due to the deterioration of antifouling performance. Removal work of the old coating film was heavy labor and high cost work such that a coating film was removed by grinding.

For example, in the antifouling paint disclosed in Patent Literature 1, a coating film is removed by dissolving an adhesive using an organic solvent, and this requires considerable labor.

On the other hand, Patent Literature 2 refers to easiness of removal of an antifouling paint, but discloses only an invention of grinding and removing the coating film. It can be said that the removal of a coating film was still heavy labor and high coat work, and the removal work of a coating film still involved difficulty.

Furthermore, the invention disclosed in Patent Literature 2 aims for prolonging a lifetime of a coating film, and the prolongation of a lifetime is achieved by relaxing the deterioration of antifouling performance. When an underwater structure is used for a long period time, adhesive force is deteriorated and a coating film is likely to be peeled. Particularly, in the case of an underwater structure moving underwater, such as a ship, a coating film receives resistance by water, and is sometimes peeled from the underwater structure.

Furthermore, Patent Literature 2 does not disclose peeling a coating film in a sheet form (sheet peeling).

Accordingly, the present invention has been made to solve the above problems and provides an undercoat layer-forming composition, for example, having excellent adhesiveness to an adherend and capable of forming an undercoat layer of a coating film that is adhered to an adherend and can be peeled in a sheet form, and an undercoat layer.

The tackifying resin contained in the undercoat layer prevents migration of a silicone oil contained in the antifouling layer to the undercoat layer with the passage of time, whereby the adhesiveness to an adherend is developed.

Furthermore, the present invention provides a coating film that can be peeled in a sheet form, thereby facilitating removal work of the coating film, and is less likely to be peeled even if used for a long period of time in, for example, an underwater structure involving underwater movement or an underwater structure receiving water flow resistance, such as an underwater structure used in a place receiving rough wave.

### SOLUTION TO PROBLEM

One embodiment of the present invention is an undercoat layer-forming composition for forming an undercoat layer of a coating film including the undercoat layer and an antifouling layer which contains a silicone oil and is adhered to the undercoat layer,
the undercoat layer-forming composition comprising a base polymer and a tackifying resin.

In one embodiment of the present invention, the tackifying resin is preferably at least one selected from a terpene-based tackifying resin, a styrene-based tackifying resin, a rosin-based tackifying resin, an alicyclic saturated hydrocarbon-based tackifying resin and an acrylic tackifying resin.

In one embodiment of the present invention, the compounding ratio of the base polymer and the tackifying resin is preferably that the amount of the tackifying resin is 0.5 to 150 parts by mass per 100 parts by mass of the base polymer.

In one embodiment of the present invention, the silicone oil preferably includes a hydrophilic silicone oil.

In one embodiment of the present invention, the silicone oil further includes a hydrophobic silicone oil.

In one embodiment of the present invention, a ratio of the mass of the hydrophilic silicone oil to the mass of the hydrophobic silicone oil (mass of hydrophobic silicone oil/mass of hydrophilic silicone oil) may be 0.5 to 20.

In one embodiment of the present invention, the base polymer may be modified with a compound containing a polar group.

One embodiment of the present invention is an undercoat layer formed by the undercoat layer-forming composition.

One embodiment of the present invention is a coating film comprising the undercoat layer and an antifouling layer.

In one embodiment of the present invention, the coating film may have a 180° peel adhesive force at 23°C with a tensile rate of 300 mm/min of 8 to 15 N/mm.

### BRIEF DESCRIPTION OF DRAWINGS

[FIG. 1] FIG. 1 is a schematic cross-sectional view showing a coating film that is one embodiment of the present invention.
[FIG. 2] FIG. 2 is a view showing difference between an adhesive force of an undercoat layer to a PMMA plate and an adhesive force of a coating film including an undercoat layer and an antifouling layer provided on the undercoat layer to a PMMA plate in Examples 1 to 9 and Comparative Examples 1 to 4.

### DESCRIPTION OF EMBODIMENTS

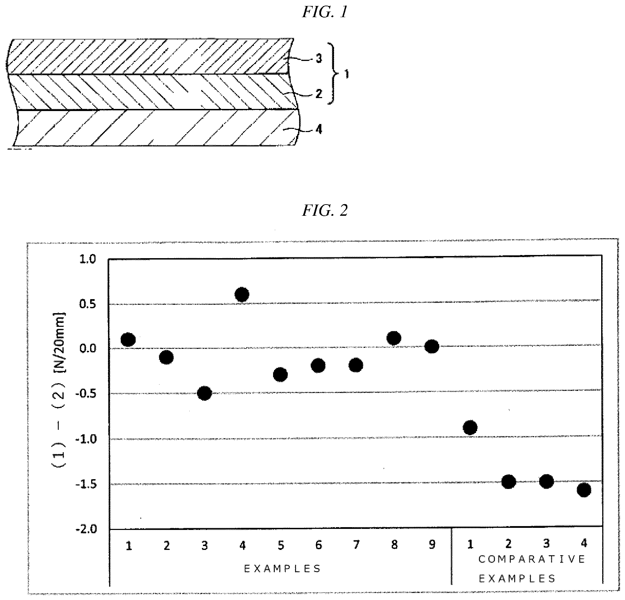

FIG. 1 is a schematic cross-sectional view of a coating film 1 applied to an underwater structure 4, that is an embodiment of the present invention. The coating film is formed as a laminate including an undercoat layer 2 and an antifouling layer 3 in the order from the underwater structure side. The coating film can be formed by applying an undercoat layer-forming composition according to an embodiment of the present invention to the underwater structure, drying the composition and then applying an antifouling layer-forming composition thereto, followed by drying.

### <Undercoat layer>

The undercoat layer according to an embodiment of the present invention can be formed by the undercoat layer-forming composition, and, for example, can be formed by applying the undercoat layer-forming composition to an underwater structure and drying the composition.

The undercoat layer-forming composition according to an embodiment of the present invention is an undercoat layer-forming composition for forming an undercoat layer of a coating film including the undercoat layer and an antifouling layer which contains a silicone oil and is adhered to the undercoat layer, and the undercoat layer-forming composition comprises a base polymer and a tackifying resin.

### (Tackifying resin)

In the undercoat layer-forming composition according to an embodiment of the present invention, adhesive force to an adherend is improved by containing a tackifying resin in the composition. Furthermore, even in the case wherein the antifouling layer contains a silicone oil, deterioration of adhesive force between an adherend and the undercoat layer can be prevented. In particular, even in the case where the antifouling layer containing a hydrophilic silicone oil, the deterioration of adhesive force can be suppressed. The reason for this is that the tackifying resin contained in the undercoat layer prevents migration of a silicone oil contained in the antifouling layer to the undercoat layer with the passage of time.

Examples of the tackifying resin include a terpene-based tackifying resin, a styrene-based tackifying resin, a rosin-based tackifying resin, an alicyclic saturated hydrocarbon-based tackifying resin and an acrylic tackifying resin. Of those, a terpene-based tackifying resin is preferred, and an aromatically modified terpene resin is more preferred.

Specific examples of the rosin-based tackifying resin include unmodified rosins (crude rosins) such as gum rosin, wood rosin and a tall oil resin; modified rosin (hydrogenated rosins, disproportionated rosins, polymerized rosins and other chemically modified rosins; hereinafter the same) obtained by modifying those unmodified rosins by hydrogenation, disproportionation, polymerization or the like; and other various rosin derivatives.
Examples of the rosin derivatives include rosin esters such as compounds obtained by esterifying unmodified rosins with alcohols (that is, esterified compounds of rosin) and compounds obtained by esterifying modified rosins with alcohols (that is, esterified compounds of modified rosin); unsaturated fatty acid-modified rosins obtained by modifying unmodified rosin or modified rosin with an unsaturated fatty acid; unsaturated fatty acid-modified rosin esters obtained by modifying rosin esters with an unsaturated fatty acid; rosin alcohols obtained by reducing a carboxyl group in unmodified rosins, modified rosins, unsaturated fatty acid-modified rosins or unsaturated fatty acid-modified rosin esters; metal salts of rosins (particularly rosin esters) such as unmodified rosin, modified rosin and various rosin derivatives; and rosin phenol resins obtained by adding a phenol to rosins (unmodified rosin, modified rosin, various rosin derivatives and the like) in the presence of an acid catalyst, followed by thermal polymerization. Of those, a rosin ester-based tackifying resin is preferred.

As the rosin-based tackifying resin, commercially available products can be used. The commercially available products include HARIESTER TF, HARIESTER S, NEOTALL G2, NEOTALL 101N, NEOTALL 125HK, HARITACK 8LJA, HARITACK ER95, HARITACK SE10, HARITACK PH, HARITACK F85, HARITACK F105, HARITACH FK100, HARITACK FK125 and HARITACK PCJ, manufactured by Harima Chemicals Group, Inc.; Foral 105-E, Foral 85-E and Foral AX-E, manufactured by Eastman Chemical Company; Super Ester A-75, Super Ester A-100, Super Ester A-115, Super Ester A-125, Pensel A, Pensel AZ, Pensel C, Pensel D-125, Pine Crystal KE-100, Pine Crystal KE-311, Pine Crystal KE-359, Pine Crystal KE-604 and Pine Crystal KR-140, manufactured by Arakawa Chemical Industries, Ltd.; and KF382S, KF392S, KF364, KF384F, KF394S, KF398S, KF399S, KF452S, KF462S, KF454S, KF464S, KP120, KP130, KP140, KP150, KP107 and KP108, manufactured by GUANGDONG KOMO.

Examples of the terpene-based tackifying resin include terpene resins such as α-pinene polymer, β-pinene polymer and dipentene polymer; and modified terpene resins obtained by modifying (phenol modifying, aromatically modifying, hydrogenation modifying, hydrocarbon modifying or the like) those terpene resins. Examples of the modified terpene resins include a terpene-modified phenol resin, an aromatically modified terpene resin (such as a styrene-modified terpene resin) and a hydrogenated terpene resin. Aromatically modified terpene resin is preferably used from the standpoint of the improvement in adhesive force of the undercoat layer to an underwater structure. The terpene-based tackifying resins (for example, aromatically modified terpene resins) may be used in one kind or a mixture of two or more kinds having different kind, properties (for example, a softening point or the like) and the like.

As the terpene-based tackifying resin, commercially available products can be used. The products that can be used include YS Resin TO125 (manufactured by Yasuhara Chemical Co., Ltd.) and ARKON M115 (manufactured by Arakawa Chemical Industries, Ltd.).

Examples of the hydrocarbon-based tackifying resin include various hydrocarbon resins such as an aliphatic (C5 series) petroleum resin, an aromatic (C9 series) petroleum resin, an aliphatic/aromatic copolymer type (C5/C9 series) petroleum resin, their hydrogenated products (for example, alicyclic petroleum resin (alicyclic saturated hydrocarbon resin) obtained by hydrogenating an aromatic petroleum resin), their various modified products (for example, maleic anhydride-modified product), a coumarone resin, and a coumarone-indene resin. Of those, an alicyclic saturated hydrocarbon resin is preferred. The hydrocarbon tackifying resins may be used in one kind alone and may be used as a mixture of two or more kinds.

Examples of the styrene-based tackifying resin include a styrene homopolymer, an α-methylstyrene homopolymer, an α-methylstyrene/styrene copolymer, a styrene/aliphatic copolymer, an α-methylstyrene/styrene/aliphatic copolymer, a C9 series petroleum resin, a C5/C9 series petroleum resin, a phenol-modified styrene resin and their hydrogenated products. The styrene-based tackifying resin may be used in one kind alone and may be used as a mixture of two or more kinds.

Above all, a styrene homopolymer, an α-methylstyrene homopolymer, an α-methylstyrene/styrene copolymer, a styrene/aliphatic copolymer, an α-methylstyrene/styrene/aliphatic copolymer, a phenol-modified styrene resin and their partially hydrogenated products are preferred, and a styrene homopolymer, an α-methylstyrene homopolymer, an α-methylstyrene/styrene copolymer and their partially hydrogenated products are more preferred. Those have excellent compatibility with a (meth)acrylic block copolymer. A styrene homopolymer is particularly preferred.

As the styrene-based tackifying resin, commercially available products can be used. The products include SYLVARES SA-85, SYLVARES SA-100, SYLVARES SA-120 and SYLVARES SA-140, manufactured by Arizona Chemical; ESCOREZ ECR-213 and ESCOREZ ECR-807, manufactured by Exxon Mobil; YS Resin SX100 manufactured by Yasuhara Chemical Co., Ltd.; FTR0100, FTR2120, FTR2140, FTR6100, FTR 6110, FTR6125, FTR7100, FTR8100, FTR8120 and FMR0150, manufactured by Mitsui Chemicals, Inc.; and Kristalex F85, Kristalex F100, Kristalex F115, Kristalex 1120, Kristalex 3070, Kristalex 3085, Kristalex 3100 and Kristalex 5140, manufactured by Eastman Chemical.

Examples of the acrylic tackifying resin include acrylic tackifying resins containing, as a base, an acrylic polymer (homopolymer or copolymer) using one kind or two more kinds of (meth)acrylic acid alkyl esters as a monomer component. Specific examples of the (meth)acrylic acid alkyl ester include (meth)acrylic acid C1-20 alkyl esters such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate. Above all, (meth)acrylic acid alkyl esters having a straight chain or branched alkyl group having 4 to 18 carbon atoms can be preferably used.

The acrylic polymer may contain a unit corresponding to other monomer component copolymerizable with the (meth)acrylic acid alkyl ester as necessary for the purpose of the improvement of cohesive force, heat resistance, crosslinkability and the like.

The amount of the tackifying resin used with respect to 100 parts by mass of the base polymer is not particularly limited. From the standpoint of adhesive force, the amount can be, for example, 0.5 parts by mass or more, and is preferably 2 parts by mass or more, more preferably 3 parts by mass or more, still more preferably 4 parts by mass or more, still further preferably 5 parts by mass or more and particularly preferably 10 parts by mass or more. On the other hand, from the standpoint of film properties, the amount of the tackifying resin used with respect to 100 parts by mass of the base polymer is preferably 150 parts by mass or less, more preferably 120 parts by mass of less, still more preferably 90 parts by mass or less, still further preferably 60 parts by mass or less and particularly preferably 50 parts by mass or less.

Tackifying resin other than the above may be mixed, depending on the properties of the undercoat layer-forming composition.

The base polymer of the undercoat layer-forming composition used herein indicates a main component in a rubbery polymer (polymer showing rubber elasticity in a temperature region in the vicinity of room temperature) contained in the undercoat layer-forming composition and typically means a component occupying more than 50 mass % of a polymer component.

### (Base polymer)

The base polymer is preferably an elastomer. For example, a rubber (thermosetting elastomer) and a thermoplastic elastomer can be used. On the other hand, a part of a thermoplastic resin such as polyvinyl chloride, showing severe deterioration due to long-term use has a possibility to cut the coating film when peeling, and is therefore not preferred.

Examples of the rubber than can be used include acryl rubber, diene rubber, butyl rubber, nitrile rubber, hydrogenated nitrile rubber, fluorine rubber, silicone rubber, ethylene-propylene rubber, chloroprene rubber, urethane rubber and epichlorohydrin rubber. Of those, acryl rubber and diene rubber are particularly preferably used. Examples of the diene rubber that can be used include natural rubber, isoprene rubber, butadiene rubber, styrene-butadiene rubber, chloroprene rubber and acrylonitrile-butadiene rubber. Of those, styrene-butadiene rubber is preferably used.

Examples of the thermoplastic elastomer than can be used include monovinyl-substituted aromatic compound-based thermoplastic elastomers such as an acrylic thermoplastic elastomer and a styrene-based thermoplastic elastomer.

Examples of the acrylic thermoplastic elastomer include a block copolymer of PMMA (polymethyl methacrylate) and acrylic acid alkyl ester. Examples of the acrylic acid alkyl ester include butyl acrylate, 2-ethylhexyl acrylate and octyl acrylate. The block copolymer can adjust peeling under constant load and tensile break strength/adhesive force to the ranges defined in the present invention by changing the proportion of PMMA as a hard segment. Specifically, when the content ratio of PMMA is increased, tensile break strength tends to be increased and adhesive force tends to be decreased.

Examples of the styrene-based thermoplastic elastomer that can be used include SBS (styrene-butadiene block copolymer), SIS (styrene-isoprene block copolymer), SEBS (styrene-ethylene-butylene-styrene block copolymer), SEPS (styrene-ethylene-propylene-styrene block copolymer) and SEEPS (styrene-ethylene-ethylene-propylene-styrene block copolymer).

When the base polymer is a styrene-based thermoplastic elastomer, tensile break strength and adhesive force can be adjusted by adjusting the styrene content in the elastomer. The styrene content is preferably 20 to 40 mass %, more preferably 22 to 35 mass % and still more preferably 25 to 33 mass %.

The content ratio of the base polymer in the undercoat layer-forming composition is preferably 5 to 95 mass %, more preferably 10 to 90 mass %, still more preferably 15 to 80 mass %, particularly preferably 20 to 70 mass % and most preferably 25 to 60 mass %.

The base polymer may be modified with a compound containing a polar group for the purpose of, for example, enhancing adhesiveness to the antifouling layer. Examples of the polar group include a hydroxyl group, a carboxyl group, an alkoxysilyl group, an acid anhydride group such as a maleic anhydride group; and an amino group. Of those, a maleic anhydride group or an amino group is preferred. The content of the compound containing a polar group in the base polymer is preferably 0.1 to 20 mass %, more preferably 0.3 to 15 mass % and still more preferably 0.5 to 5 mass %.

For the same purpose, a compound containing a polar group may be contained in the undercoat layer-forming composition. Examples of such compound include a resin containing the polar group described above, a silane coupling agent and a silicone oil. Examples of the resin containing a polar group includes an ionomer, a rosin resin and a silicone resin. The content of the compound containing a polar group to a resin component in the undercoat layer-forming composition is preferably 5 to 95 mass %, more preferably 10 to 90 mass %, still more preferably 15 to 80 mass %, particularly preferably 20 to 70 mass % and most preferably 25 to 60 mass %.

Examples of the solvent that can be used include aromatic hydrocarbons such as benzene, toluene, xylene, ethylbenzene and trimethylbenzene: aliphatic hydrocarbons such as hexane and heptane; esters such as ethyl acetate and vinyl acetate; ethers such as dioxane and diethyl ether; alcohols such as ethanol, propanol and n-butanol; ketones such as acetone, diethyl ketone and methyl isobutyl ketone; and water. The solvent may be one kind alone and may be a mixture of two or more kinds.

The content ratio of the solvent contained is preferably 5 to 95 mass %, more preferably 10 to 90 mass %, still more preferably 20 to 85 mass %, particularly preferably 30 to 80 mass % and most preferably 40 to 75 mass %.

In the case where the antifouling layer is formed by a silicone paint described hereinafter, the undercoat layer-forming composition preferably contains a styrene-based thermoplastic elastomer, 0.1 to 20 mass % of which having been modified with the compound containing a polar group, in order for enhancing adhesiveness between the antifouling layer and the undercoat layer. In this case, the styrene content can be, for example, 20 to 40 mass %.

The thickness of the undercoat layer may be set depending on uses and tensile break strength described hereinafter, and is not particularly limited. The thickness is, for example, 50 to 500 µm, preferably 70 to 300 µm and still more preferably 100 to 200 µm. The tensile break strength described hereinafter mainly depends on the undercoat layer. Therefore, the tensile break strength can be adjusted by changing only the thickness of the undercoat layer.

### <Antifouling layer>

The antifouling layer according to an embodiment of the present invention can be formed by an antifouling layer-forming composition, and, for example, can be formed by applying an antifouling layer-forming composition to the undercoat layer provided on a structure and drying the composition.

Examples of the antifouling layer-forming composition that can be used include a silicone paint, a copper paint and a zinc paint. The paint that does not suppose overcoating, such as a silicone paint, is preferably used.

The silicone paint contains an organopolysiloxane. The organopolysiloxane has a curing reactive group. Therefore, the antifouling layer formed by the silicone paint contains a silicone resin that is a reaction product of the organopolysiloxane. Examples of the curing reactive group that may be used include a hydroxyl group, an alkoxy group having 1 to 8 carbon atoms, a vinyl group and a (meth)acryl group. Examples of the hydrolyzable group other than a hydroxyl group, that can be use includes an alkoxy group such as methoxy group, ethoxy group or propoxy group; an alkoxyalkoxy group such as methoxyethoxy group, ethoxyethoxy group or methoxypropoxy group; an acyloxy group such as acetoxy group, octanonyloxy group or benzoyloxy group; an alkenyloxy group such as vinyloxy group, isopropenyloxy group or 1-ethyl-2-methylvivnyloxy group; a ketoxime group such as dimethyl ketoxime group, methyl ethyl ketoxime group or diethyl ketoxime group; an amino group such as dimethylamino group, diethylamino group, butylamino group or cyclohexylamino group; an aminoxy group such as dimethylaminoxy group or diethylaminoxy group; and an amide group such as N-methylacetamide group, N-ethylacetamide group or N-methylbenzamide group.

The silicone paint preferably further contains a silicone oil. Examples of the silicone oil that can be used include dimethyl silicone oil in which all groups are methyl group; methylphenyl silicone oil in which a part of methyl groups in the dimethyl silicone oil is substituted with phenyl group; an amino-modified silicone oil substituted with monoamine, diamine or amino-polyether group; an epoxy-modified silicone oil substituted with epoxy, alicyclic epoxy, epoxy-polyether or epoxy-aralkyl group; a carbinol-modified silicone oil substituted with carbinol group; a mercapto-modified silicone oil substituted with mercapto group; a carboxyl-modified silicone oil substituted with carboxyl group; a methacryl-modified silicone oil substituted with methacryl group; a polyether-modified silicone oil substituted with polyether; a long chain alkyl-modified silicone oil substituted with long chain alkyl or long chain alkyl·aralkyl group; a higher fatty acid-modified silicone oil substituted with higher fatty acid ester group; and a fluoroalkyl-modified silicone oil substituted with fluoroalkyl group. Furthermore, a methyl phenyl silicone oil, a polyether-modified silicone oil and a long chain alkyl-modified silicone oil can be used. The silicone oil may be used in one kind alone, or plural kinds of silicone oils may be used. The silicone oil preferably comprises a hydrophilic silicone oil and may further comprises a hydrophobic silicone oil.

The hydrophilic silicone oil is preferably a polyether-modified silicone oil.

The polyether-modified silicone oil is a polysiloxane having a siloxane bond in a main chain thereof, and has at least one polyoxyalkylene group as a substituent. The main chain may form a ring.

Bonding position of the polyoxyalkylene group in the polyether-modified silicone oil can be any appropriate bonding position. For example, the polyoxyalkylene group may be bonded to both ends of the main chain, the polyoxyalkylene group may be bonded to one end of the main chain, and the polyoxyalkylene group may be bonded to a side chain.

The polyether-modified silicone oil has HLB of preferably 3 to 15 and more preferably 3 to 10. When the HLB of the polyether-modified silicone oil is in the range, antifouling effect of the antifouling layer can be more sufficiently expressed, attachment of aquatic organisms such as algae can be more effectively prevented over a long period of time, and additionally appearance characteristics and mechanical characteristics of the antifouling layer can be more sufficiently expressed. The HLB is hydrophile and lipophile balance numerically showing the balance between hydrophile and lipophile of oil and is an abbreviation of "Valau of Hydrophile and Lipophile Balance". The HLB of the polyether-modified silicone oil can be controlled by, for example, the selection of chain length of a polyether polyoxyalkylene chain (group) and a dimethylsiloxane chain (group), and the selection of respective chain lengths of hydrophilic polyethylene oxide and hydrophobic (as compared with the hydrophilic polyethylene oxide) polypropylene oxide in the polyether polyoxyalkylene chain (group).

Examples of the polyether-modified silicone oil include side chain type (straight chain type) polyether-modified silicone oils such as trade names KF-6011 (HLB: 14.5), KF-6011P (HLB: 14.5), KF-6012 (HLB: 7.0), KF-6013 (HLB: 10.0), KF-6015 (HLB: 4.5), KF-6016 (HLB: 4.5), KF-6017 (HLB: 4.5), KF-6017P (HLB: 4.5), KF-6043 (HLB: 14.5), KF-6004 (HLB: 9.0), KF351A, KF352A, KF353, KF354L, KF355A, KF615A, KF945, KF-640, KF-642, KF-643, KF-644, KF-6020, KF-6204 and X22-4515, manufactured by Shin-Etsu Silicone Co., Ltd.; side chain type (branched chain type) polyether-modified silicone oils such as trade names KF-6028 (HLB: 4.0) and KF-6028P (HLB: 4.0) manufactured by Shin-Etsu Silicone Co., Ltd.; and side chain type (branched chain type, alkyl-comodified type) polyether-modified silicone oils such as trade name KF-6038 (HLB: 3.0) manufactured by Shin-Etsu Silicone Co., Ltd.

Examples of the hydrophobic silicone oil include an unreactive silicone oil having a main chain composed of a siloxane bond. The hydrophobic silicone oil may have a substituent, and the main chain may form a ring. The hydrophobic silicone oil may be a straight chain silicone oil or a modified silicone oil (excluding polyether-modified silicone oil). The substituent in the straight chain silicone oil is preferably an alkyl group and a phenyl group.

Specific examples of the hydrophobic silicone oil include a terminal hydroxyl group-containing dimethyl silicone oil in which both ends or one end of a polysiloxane are a hydroxyl group, a dimethyl silicone oil in which all of substituents bonded to Si of a polysiloxane is a methyl group, a phenyl methyl silicone oil (phenyl-modified silicone oil) in which a part of methyl groups of those dimethyl silicone oils is substituted with a phenyl group), and a long chain alkyl-modified silicone oil.

Examples of the hydrophobic silicone oil include trade names KF96L, KF96, KF69, KF99, KF50, KF54, KF410, KF412, KF414, KF415, FL, KF-6104 and KF-6100, manufactured by Shin-Etsu Silicone Co., Ltd.; and trade names BY16-846, SF8416, SH200, SH203, SH230, SF8419, FS1265, SH510, SH550, SH710, FZ-2110 and FZ-2203, manufactured by Dow Corning Toray Co., Ltd.

In the case where the hydrophobic silicone oil and the hydrophilic silicone oil are used together, the compounding ratio of the hydrophobic silicone oil and the hydrophilic silicone oil is not particularly limited. However, a ratio of the mass of the hydrophilic silicone oil to the mass of the hydrophobic silicone oil (mass of hydrophobic silicone oil/mass of hydrophilic silicone oil) is preferably 0.5 to 20 and more preferably 1.0 to 15. When the compounding ratio between the hydrophobic silicone oil and the hydrophilic silicone oil is in the above range, the antifouling effect of the antifouling layer can be more sufficiently expressed, adhesion of aquatic organisms such as algae can be more effectively prevented over a long period of time, and additionally adhesive force between the undercoat layer and an adherend can be further improved.

The content ratio of the silicone resin in the antifouling layer can be any appropriate content ratio depending on the content ratio of other component such as an antifouling agent. The content ratio can be, for example, 30 to 98 mass %, and is more preferably 35 to 90 mass % and still more preferably 40 to 80 mass %.

The content of the silicone oil to 100 parts by mass of the silicone resin is preferably 1 to 150 parts by mass and more preferably 40 to 140 parts by mass. The antifouling effect of the antifouling layer can be more sufficiently expressed by adjusting the content of the silicone oil to 100 parts by mass of the silicone resin to the above range, and additionally appearance characteristics and mechanical characteristics of the antifouling layer can be more sufficiently expressed.

The copper paint is a paint containing a copper compound. Examples of the copper compound that can be used include copper oxide such as cuprous oxide or cupric oxide, a copper alloy such as a copper-nickel alloy, copper salts such as copper thiocyanate or copper sulfide, and an organometal compound such as copper pyrithione or copper acetate. The zinc paint can use a paint containing zinc oxide as an antifouling agent.

The antifouling layer may contain any appropriate other additive in a range that does not impair the effect of the present invention. Examples of such other additive include an ultraviolet absorber as a weather-proof agent.

The thickness of the antifouling agent is set depending on uses, and is not particularly limited. The thickness is, for example, 50 to 500 µm, preferably 70 to 300 µm and still more preferably 100 to 200 µm.

A paint set including the antifouling layer-forming composition described above and the undercoat layer-forming composition according to an embodiment of the present invention can be formed, and the coating film is preferably formed by the paint set.

The coating film according to an embodiment of the present invention includes an undercoat layer and an antifouling layer.

The above-described explanations can be used as the undercoat layer and the antifouling layer.

The coating film according to an embodiment of the present invention preferably has 180° peel adhesive force at 23°C with a tensile rate of 300 mm/min of 8 to 15 N/mm.

The adhesive force of the undercoat layer and coating film according to the embodiments of the present invention uses adhesive force to PMMA as an index showing difficulty of separation from an adherend during use. When the adhesive force to PMMA is too low, the coating film may be spontaneously peeled. Therefore, the adhesive force is preferably 8 N/mm or more and more preferably 8.5 N/mm or more. On the other hand, when the adhesive force is too high, excessive force is required for peeling the coating film and workability may be deteriorated. Therefore, the adhesive force is preferably 15 N/mm or less and more preferably 12 N/mm or less.

### <Underwater structure>

Examples of the typical material used in the surface of an underwater structure include PMMA (polymethyl methacrylate resin), a gel coat (acrylic polymer/polystyrene, or the like), a coating film by an epoxy paint or a coating film by an enamel paint (acrylic polymer or the like), and aluminum. The present invention can use other materials.

The undercoat layer-forming composition and coating film according to the embodiments are used as an antifouling coating film that prevents aquatic organisms from adhering to and propagating on an underwater structure such as a ship, a buoy, harbor facilities, offshore oilfield equipment, a passage for plant power cooling water, a floating passage, a water gate, an underwater sensor, an underwater camera, an underwater light, an underwater pump, an underwater piping, underwater power generation facilities (for example, a tidal power generation equipment, an ocean current power generation equipment, a wave-activated power generation equipment and an offshore wind power generation equipment), an underwater rotating body such as a propeller and various underwater mooring equipment such as an underwater wire.

The undercoat layer-forming composition and coating film according to the embodiments described above may be formed on an underwater structure, and may be formed on structures other than the underwater structure. In such a case, the same effect is exhibited. For example, the undercoat layer-forming composition and coating film may be formed on the surface of various exterior materials such as a roof and an outer wall.

### Examples

The present invention is specifically described below by reference to examples, but the invention is not construed as being limited to those examples.

[Example 1]

### (Preparation of undercoat layer-forming composition)

70 Parts by mass of an amine-modified hydrogenated styrene-based thermoplastic elastomer (styrene content: 30 mass %, trade name TUFTEC MP10, manufactured by Asahikasei Chemicals Corporation), 30 parts by mass of an aromatically modified terpene resin (trade name YS Resin TO125, manufactured by Yasuhara Chemical Co., Ltd.) and toluene were mixed so as to form a 25 mass % toluene solution, and the resulting mixture was stirred at room temperature (23°C) for 12 hours. Thus, an undercoat layer-forming composition was obtained.

### (Preparation of antifouling layer-forming composition)

100 Parts by mass of a silicone resin (trade name KE445, manufactured by Shin-Etsu Silicone Co., Ltd.), 60 parts by mass of a hydrophobic silicone oil (methyl phenyl silicone oil, trade name KF50-100Cs, manufactured by Shin-Etsu Silicone Co., Ltd.) and 10 parts by mass of a hydrophilic silicone oil (polyether-modified silicone oil, trade name KF6016, manufactured by Shin-Etsu Silicone Co., Ltd.) were mixed, and the resulting mixture was stirred at room temperature (23°C) for 5 minutes. Thus, an antifouling layer-forming composition was obtained.

### (Measurement of adhesive force (2))

Using the undercoat layer-forming composition prepared above, an undercoat layer was prepared by the following method, and adhesive force was measured. The undercoat layer-forming composition was applied to a PMMA plate (trade name DELAGLAS K, manufactured by Asahikasei Technoplus Corporation, methyl methacrylate polymer 96.6% or more) by an applicator, and dried at room temperature for 12 hours. Thus, an undercoat layer having a thickness of 150 µm was prepared.

The periphery of the undercoat layer was removed such that the undercoat layer had a size of 20 mm × 100 mm. Force when the undercoat layer was peeled off from the PMMA plate at a peel angle of 180° with a peel rate of 300 mm/min was measured as adhesive force (2) using a tensile tester (AUTOGRAPH AGS-X, manufactured by Shimadzu Corporation).

In Example 1, the undercoat layer had an adhesive force (2) of 9.1 (N/mm). Since the undercoat layer contained a tackifying resin, the undercoat layer showed high adhesive force to the PMMA plate.

### (Measurement of adhesive force (1))

Using a paint set including the undercoat layer-forming composition prepared in Example 1 above and the antifouling layer-forming composition prepared above, a coating film was prepared by the following method, and adhesive force was measured. The undercoat layer-forming composition was applied to a PMMA plate (trade name DELAGLAS K, manufactured by Asahikasei Technoplus Corporation, methyl methacrylate polymer 96.6% or more) by an applicator, and dried at room temperature for 12 hours. Thus, an undercoat layer having a thickness of 150 µm was prepared. The antifouling layer-forming composition was applied to the undercoat layer thus prepared by an applicator, and dried at room temperature for 12 hours, thereby preparing an antifouling layer having a thickness of 100 µm. Thus, a coating film including the undercoat layer and the antifouling layer was prepared on the PMMA plate.

The periphery of the coating film was removed such that the coating film had a size of 20 mm × 100 mm. Force when the coting film was peeled off from the PMMA plate at a peel angle of 180° in a peel rate of 300 mm/min was measured as adhesive force (1) using a tensile tester (AUTOGRAPH AGS-X, manufactured by Shimadzu Corporation). The result is shown in Table 1.

The adhesive force (1) of the coating film of Example 1 was 9.2 (N/mm), and therefore showed high adhesive force that is the same level of the adhesive force (2) to the PMMA plate of the undercoat layer in Example 1.

### [Example 2]

### (Preparation of antifouling layer-forming composition)

A coating film was prepared in the same manner as in Example 1, except that the amount of the hydrophilic silicone oil (polyether-modified silicone oil, trade name KF6016, manufactured by Shin-Etsu Silicone Co., Ltd.) in the antifouling layer-forming composition was changed to 20 parts by mass, and adhesive force of the coating film was measured.

The adhesive force (1) of the coating film of Example 2 was 9.0 (N/mm). Therefore, the coating film of Example 2 showed high adhesive force that is the same level of the adhesive force (2) to the PMMA plate of the undercoat layer in Example 1. The result is shown in Table 1.

### [Examples 3 to 9]

The undercoat layer-forming compositions and the antifouling layer-forming compositions were prepared in the same manners as in Example 1, except that the compositions of the undercoat layer-forming compositions and the antifouling layer-forming compositions were changed as shown in Table 1. Using those compositions, coating films were prepared in the same manner as in Example 1, and adhesive force (1) and adhesive force (2) of the coating films were evaluated. The results are shown in Table 1.

### [Comparative Example 1]

The undercoat layer and the coating film were formed in the same manners as in Example 1, except that 70 parts by mass of the amine-modified hydrogenated styrene-based thermoplastic elastomer (styrene content: 30 mass %, trade name TUFTEC MP10, manufactured by Asahikasei Chemicals Corporation) and 30 parts by mass of the aromatically modified terpene resin (trade name YS Resin TO125, manufactured by Yasuhara Chemical Co., Ltd.) were changed to 100 parts by mass of the amine-modified hydrogenated styrene-based thermoplastic elastomer (styrene content: 30 mass %, trade name TUFTEC MP10, manufactured by Asahikasei Chemicals Corporation), and adhesive force of those were evaluated. The results are shown in Table 1.

The undercoat layer of Comparative Example 1 did not contain a tackifying resin. Therefore, adhesive force (2) was low and was 7.7 (N/mm).

### [Comparative Examples 2 to 4]

The undercoat layer-forming compositions and the antifouling layer-forming compositions were prepared in the same manners as in Example 1, except that the compositions of the undercoat layer-forming compositions and the antifouling layer-forming compositions were changed as shown in Table 1. Using those compositions, coating films were prepared in the same manner as in Example 1, and adhesive force (1) and adhesive force (2) were evaluated. The results are shown in Table 1.

The difference between the adhesive force to the PMMA plate of the undercoat layer and the adhesive force to the PMMA plate of the coating film including the undercoat layer and the antifouling layer provided thereon (adhesive force (1) - adhesive force (2)) and the lowering rate of the adhesive force ([(adhesive force (1) - adhesive force (2)]/adhesive force (2)] × 100) were calculated from each adhesive force (1) and adhesive force (2) in Examples 1 to 9 and Comparative Examples 1 to 4. The results are shown in Table 1. Furthermore, the difference of the adhesive force in Examples 1 to 9 and Comparative Examples 1 to 4 is shown in FIG. 2.

**TABLE 1**

| | Material | | Example | | | | | | | | | Comparative Example | | | |
|---|---|---|---|---|---|---|---|---|---|---|---|---|---|---|---|
| | | | 1 | 2 | 3 | 4 | 5 | 6 | 7 | 8 | 9 | 1 | 2 | 3 | 4 |
| Undercoat layer-forming composition | Base polymer | FG1901 | | | 70 | 70 | | | | | | | 100 | | |
| | | MP-10 | 70 | 70 | | | | | | | | 100 | | | |
| | | U-205 | | | | | | 70 | 70 | | | | | | 100 |
| | | B100 | | | | | 70 | | | | | | | | |
| | | G1652 | | | | | | | | 70 | 70 | | | 100 | |
| | Tackifying resin | YS Resin TO125 | 30 | 30 | | | | | | 30 | | | | | |
| | | ARKON M135 | | | 30 | | 30 | | | | 30 | | | | |
| | | YS Resin SX100 | | | | 30 | | | | | | | | | |
| | | Nanolet TH-130 | | | | | | 30 | | | | | | | |
| | | Super Ester NS-100H | | | | | | | 30 | | | | | | |
| | Solvent | Xylene | 400 | 400 | 400 | 400 | 900 | | | 400 | 400 | 400 | 400 | 400 | |
| Antifouling layer-forming composition | Si resin | KE445 | 100 | 100 | 100 | | | | | | | 100 | | | |
| | | KE118 | | | | 100 | 100 | 100 | 100 | 100 | 100 | | 100 | 100 | 100 |
| | Si oil | KF-50-100 | 60 | 60 | 60 | 30 | 30 | 30 | 30 | 30 | 30 | 60 | 30 | 30 | 30 |
| | | KF6016 | 10 | 20 | 20 | 30 | 30 | 30 | 30 | 30 | 30 | 10 | 30 | 30 | 30 |
| | Solvent | Xylene | 170 | 180 | 180 | 160 | 160 | 160 | 160 | 160 | 160 | 170 | 160 | 160 | 160 |
| Evaluation | Coating film (1) Adhesive force (N/mm) to PMMA plate | | 9.2 | 9.0 | 10.0 | 5.1 | 4.4 | 5.5 | 6.0 | 9.6 | 11.2 | 6.8 | 7.5 | 6.5 | 1.0 |
| | Undercoat layer (2) Adhesive force (N/mm) to PMMA plate | | 9.1 | 9.1 | 10.5 | 4.5 | 4.7 | 5.7 | 6.2 | 9.5 | 11.2 | 7.7 | 9.0 | 8.0 | 2.6 |
| | Difference of adhesive force ((1) - (2)) | | 0.1 | -0.1 | -0.5 | 0.6 | -0.3 | -0.2 | -0.2 | 0.1 | 0.0 | -0.9 | -1.5 | -1.5 | -1.6 |
| | Lowering rate of adhesive force ([((1) - (2))/(2)] × 100) | | 1% | -1% | -5% | 13% | -6% | -4% | -3% | 1 % | 0% | -12% | -17% | -19% | -62% |

### [Base polymer]

FG1901: Maleic acid-modified SEBS, manufactured by Kraton Japan Polymer
MP-10: Amine-modified hydrogenated styrene type thermoplastic elastomer, trade name TUFTEC MP10, manufactured by Asahikasei Chemicals Corporation
U-205: Urethane emulsion, manufactured by ALBERDINGK
B 100: PIB (manufactured by BASF)
G1652: SEBS, manufactured by Kraton Japan Polymer

### [Tackifying resin]

YS Resin TO125: Aromatic terpene (manufactured by Yasuhara Chemical Co., Ltd.)
ARKON M135: Saturated hydrocarbon (manufactured by Arakawa Chemical Industries, Ltd.)
YS Resin SX100: Styrene (manufactured by Yasuhara Chemical Co., Ltd.)
Nanolet TH-130: Terpene phenol emulsion ((manufactured by Yasuhara Chemical Co., Ltd.)
Super Ester NS-100H: Rosin ester emulsion (manufactured by Arakawa Chemical Industries, Ltd.)

### [Si resin (silicone resin)]

KE445: One-part condensation silicone resin (manufactured by Shin-Etsu Chemical Co., Ltd.)
KE118 (Curing agent CAT118, 5 parts): Two-part condensation silicone resin (manufactured by Shin-Etsu Chemical Co., Ltd.)

### [Si oil (silicone oil)]

KF50-100: Phenyl-modified silicone oil (manufactured by Shin-Etsu Chemical Co., Ltd.)
KF6016: PEG-modified silicone oil (manufactured by Shin-Etsu Chemical Co., Ltd.)

Comparing Example 1 with Comparative Example 1, the undercoat layer using a tackifying resin according to Example 1 showed excellent adhesive force as compared with the undercoat layer according to Comparative Example 1.

It is understood from the comparison between the adhesive force (1) and the adhesive force (2) in Example 1 that because the coating film according to Example 1 contained the tackifying resin in the undercoat layer, the tackifying resin prevented migration of the silicone oil contained in the antifouling layer and the adhesive force (1) of the coating film of Example 1 expressed excellent adhesive force that is the same level of the adhesive force (2) of the undercoat layer. It is further understood that in Example 2 in which the content of the silicone oil in the antifouling layer was increased, the migration of the silicone oil was prevented by the tackifying resin and excellent adhesive force that is the same level of the adhesive force (2) of the undercoat layer of Example 1 was expressed.

It could be confirmed that excellent adhesive force was achieved and excellent effect as same as in Example 1 was achieved in Example 3 in which the kind of the elastomer and the kind of the tackifying resin were changed.

It is understood that in Examples 4 to 9 in which the kind of the elastomer and the kind of the tackifying resin were changed and the kind of the silicone resin of the overcoat layer was changed, because the undercoat layer contained the tackifying resin, the tackifying resin prevented the migration of the silicone oil contained in the antifouling layer and the adhesive force (1) of the coating film was excellent adhesive force that is the same level of the adhesive force (2) of the undercoat layer.

On the other hand, it is understood from the comparison between the adhesive force (1) and the adhesive force (2) in Comparative Example 1 that because the coating film according to Comparative Example 1 did not contain the tackifying resin, the adhesive force (1) was decreased by the migration of the silicone oil contained in the antifouling layer. It is understood that the coating film according to Comparative Example 2 had high content of the silicone oil in the antifouling layer as compared with Comparative Example 1, and the adhesive force (1) was further decreased.

It is understood that because the tackifying resin was not contained in the undercoat layer in Comparative Examples 2 to 4 in which the kind of the elastomer and the kind of the tackifying resin were changed, the adhesive force (1) was further decreased by the migration of the silicone oil contained in the antifouling layer.

From the above, according to the present invention, it is understood that by containing the tackifying resin in the undercoat layer, not only the adhesive force is improved, but the effect that the decrease of the adhesive force by the migration of the silicone oil is prevented is achieved even in the case of laminating the undercoat layer with the antifouling layer containing the silicone oil.

### INDUSTRIAL APPLICABILITY

According to the present invention, a coating film that can be peeled in a sheet form, facilitates removal work and is less likely to be peeled even if used in an underwater structure for a long period of time, and an undercoat layer-forming composition for forming an undercoat layer of the coating film are provided.

Although the present invention has been described in detail and by reference to the specific embodiments, it is apparent to one skilled in the art that various modifications or changes can be made without departing the spirit and scope of the present invention.

This application is based on Japanese Patent Application No. 2018-63247 filed March 28, 2018, the disclosure of which is incorporated herein by reference.

### REFERENCE SIGNS LIST

- 1:: Coating film
- 2:: Undercoat layer
- 3:: Antifouling layer
- 4:: Underwater structure

## Claims

1. An undercoat layer-forming composition for forming an undercoat layer of a coating film including the undercoat layer and an antifouling layer which contains a silicone oil and is adhered to the undercoat layer,
the undercoat layer-forming composition comprising a base polymer and a tackifying resin.

2. The undercoat layer-forming composition according to claim 1, wherein the tackifying resin is at least one selected from a terpene-based tackifying resin, a styrene-based tackifying resin, a rosin-based tackifying resin, an alicyclic saturated hydrocarbon-based tackifying resin and an acrylic tackifying resin.

3. The undercoat layer-forming composition according to claim 1 or 2, wherein a compounding ratio of the base polymer and the tackifying resin is that the amount of the tackifying resin is 0.5 to 150 parts by mass per 100 parts by mass of the base polymer.

4. The undercoat layer-forming composition according to any one of claims 1 to 3, wherein the silicone oil includes a hydrophilic silicone oil.

5. The undercoat layer-forming composition according to claim 4, wherein the silicone oil further includes a hydrophobic silicone oil.

6. The undercoat layer-forming composition according to claim 5, wherein a ratio of the mass of the hydrophilic silicone oil to the mass of the hydrophobic silicone oil (mass of hydrophobic silicone oil/mass of hydrophilic silicone oil) is 0.5 to 20.

7. The undercoat layer-forming composition according to any one of claims 1 to 6, further comprising a compound containing a polar group.

8. The undercoat layer-forming composition according to any one of claims 1 to 7, wherein the base polymer is modified with a compound containing a polar group.

9. An undercoat layer formed by the undercoat layer-forming composition according to any one of claims 1 to 8.

10. A coating film comprising the undercoat layer according to claim 9 and an antifouling layer.

11. The coating film according to claim 10, which has a 180° peel force at 23°C with a tensile rate of 300 mm/min of 8 to 15 N/mm.
